# EUROPEAN PATENT SPECIFICATION

(11) **EP 4 098 735 B1**
(45) Date of publication and mention of the grant of the patent: **04.10.2023**
(21) Application number: 22175027.6
(22) Date of filing: 24.05.2022
(51) Int. Cl.: C12G 1/06, B67B 1/04, B67C 3/06

(54) **PROCESS AND BOTTLING SYSTEM OF SPARKLING WINES PRODUCED IN AUTOCLAVE**
VERFAHREN UND ABFÜLLSYSTEM FÜR IN EINEM AUTOKLAVEN HERGESTELLTE SCHAUMWEINE
PROCÉDÉ ET SYSTÈME DE MISE EN BOUTEILLE DE VINS MOUSSEUX PRODUITS EN AUTOCLAVE

(30) Priority: 01.06.2021 IT 202100014387
(43) Date of publication of application: 07.12.2022
(73) Proprietor: Zannini, Paolo, 60035 Jesi (AN) (IT)
(72) Inventor: Zannini, Paolo, 60035 Jesi (AN) (IT)
(74) Representative: Baldi, Claudio

(56) References cited:
- IT-A1- MI 940 275
- IT-U1-201900 002 877
- US-A- 927 944
- US-A- 3 112 201

## Description

The present invention relates to a process and a bottling system of sparkling wines produced in autoclave, such as with the Martinotti-Charmat method, which provides for the controlled refermentation of the wine in large pressurized containers, called autoclaves, as opposed to the classic method, according to which the refermentation is carried out in the bottle.

By means of the refermentation in the bottle, the wine acquires the traditional pressure (which is visible in the form of bubbles) guaranteed by the carbon dioxide produced by the second fermentation and trapped in the liquid due to the fact that the liquid is closed in the bottle. After an intermediate step wherein the bottle is opened and disgorged in order to extract the lees, the bottle is definitively re-sealed with the traditional mushroom-shaped cork and with a metal cage to prevent the cork from coming out under the pressure of the gas formed in the bottle because of the refermentation process. The development of carbon dioxide, which is due to the fermentation process, produces a pressure inside the bottle which can vary from a minimum of 3 bars to a maximum of 6.5 bars.

On the other hand, the bottling process according to the Martinotti-Charmat method is extremely complicated and delicate because of the risk that the beverage will lose its bubbles during the transfer of the sparkling wine from the autoclave to the bottle. Otherwise said, the bottling process must be carried out in a hyperbaric environment, that is to say in overpressure, to prevent the beverage from losing the carbon dioxide.

ITMI940275 describes a bottling system of a sparkling wine contained in an autoclave. A transfer manifold is disposed on a neck of a bottle. The transfer manifold has an axial conduit for the passage of a cap and three ports: a first port connected to the autoclave, a second port connected to a first vent valve and to a compensation cylinder, and a third port connected to a second vent valve. By means of the compensation cylinder and of the first vent valve, the same pressure that is inside the autoclave is obtained inside the bottle, so that the sparkling wine can be transferred from the autoclave to the bottle without losing its bubbles. While the wine is being transferred, the second vent valve remains closed and the gas flows out from the first vent valve. During the insertion of the cap in the transfer manifold, since the cap obstructs the passage towards the first vent valve, the second vent valve is opened and the remaining gas comes out from the second vent valve. Such a bottling system is impaired by two drawbacks: a constructional complexity due to the presence of three ports in the transfer manifold (particularly the third port connected to the second vent valve) and an unnecessary waste of gas flowing out of the transfer manifold from both the first vent valve and the second vent valve.

US927944 describes an apparatus for the fermentation and decantation of sparkling wines under pressure, wherein a CO2 cylinder is used to regulate the pressure of the multiple containers (autoclaves) which contain the sparkling wine and the pressure inside the bottle for bottling.

The purpose of the present invention is to solve the drawbacks of the prior art by providing a process and a bottling system of sparkling wines produced in autoclaves, which can be implemented and installed in any facility at room pressure, resulting in a great simplification and inexpensiveness of the system.

Another purpose of the invention is to realize a system wherein the capping station of the bottle coincides with the transfer of the liquid from the autoclave to the bottle.

A further purpose of the invention is to realize a system and a bottling method that are simple to implement and capable of avoiding the waste of the gas used to operate the system.

All the aforementioned purposes have been achieved by the present invention, the main features of which are detailed in the appended independent claims.

Advantageous embodiments appear from the dependent claims.

The bottling system according to the invention is defined in claim 1.

Said bottling system provides that the compensation cylinder is not directly connected to the transfer manifold, but is connected to the autoclave. In such a case, the transfer manifold only has two ports: an inlet connected to the autoclave for the introduction of liquid and an outlet connected to the autoclave to let the gas out during the transfer. In this way, all the gas circulating in the transfer manifold during the operation of the system is recovered and recirculated inside the autoclave, with a considerable saving compared to the prior art. Considering that the inert gas used for the operation of the system is generally CO2 and that the cost of refilling a CO2 cylinder is very high, such a system provides a considerable money saving compared to the prior art.

For the sake of clarity, the description of the process and of the bottling system according to the invention continues with reference to the appended drawings, which are shown only for illustrative, non-limiting purposes, wherein:
- Fig. 1 is a schematic block diagram illustrating the various components of the bottling system according to the invention;
- Figs. 2 and 3 are axial views of a transfer manifold applied to a bottle neck, wherein the cap is in two different moments of a capping step of the bottle; and
- Fig. 3A is an enlargement of a detail of Fig. 3, which shows a full bottle with the cap in place leaving the bottling system.

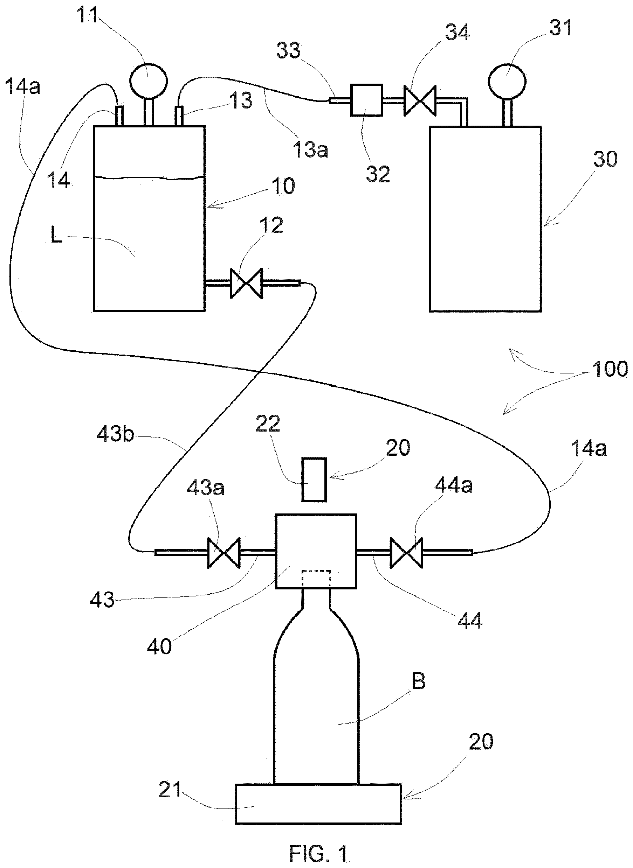

With reference to Fig. 1, the bottling system according to the invention is described, which is indicated by reference numeral 100. The bottling system (100) comprises a single operating station wherein a beverage is transferred from an autoclave (10) to a bottle (B) and the bottle (B) is closed with a cap (T), such as a traditional pressure cap, preferably made of cork.

The bottling system (100) comprises:
- an autoclave (10) containing a liquid (L) consisting of sparkling wine to be transferred into a bottle (B);
- a capping device (20) for forcefully inserting a cap (T) into a neck (C) of the bottle (B)
- a compensation cylinder (30) containing an inert gas, preferably carbon dioxide; and
- a transfer manifold (40) applicable to the neck (C) of the bottle for transferring the liquid (L) from the autoclave (10) into the bottle (B).

The capping device (20) comprises a support pedestal (21) for the bottle (B) and a punch (22) used to forcefully push the cap (T) downwards until it is completely inserted inside the neck of the bottle.

The compensation cylinder (30) is provided with a pressure gauge (31) that indicates the pressure of the gas inside the compensation cylinder (30) and with a pressure reducer (32) to reduce the pressure of the gas from an outlet nozzle (33) of the compensation cylinder (30). The compensation cylinder (30) also comprises an opening/closing tap (34).

The autoclave (10) comprises:
- a pressure gauge (11) located in an upper part of the autoclave (10), which indicates the gas pressure inside the autoclave (10);
- a tap (12) located in a lower part of the autoclave (10) through which it is possible to extract the liquid from the autoclave (10);
- a first nozzle (13) located in an upper part of the autoclave (10) and connected to said outlet nozzle (33) of the compensation cylinder (30) by means of a tube (13a); and
- a second nozzle (14) located in an upper part of the autoclave (10) and connected to the transfer manifold (40) by means of a tube (14a).

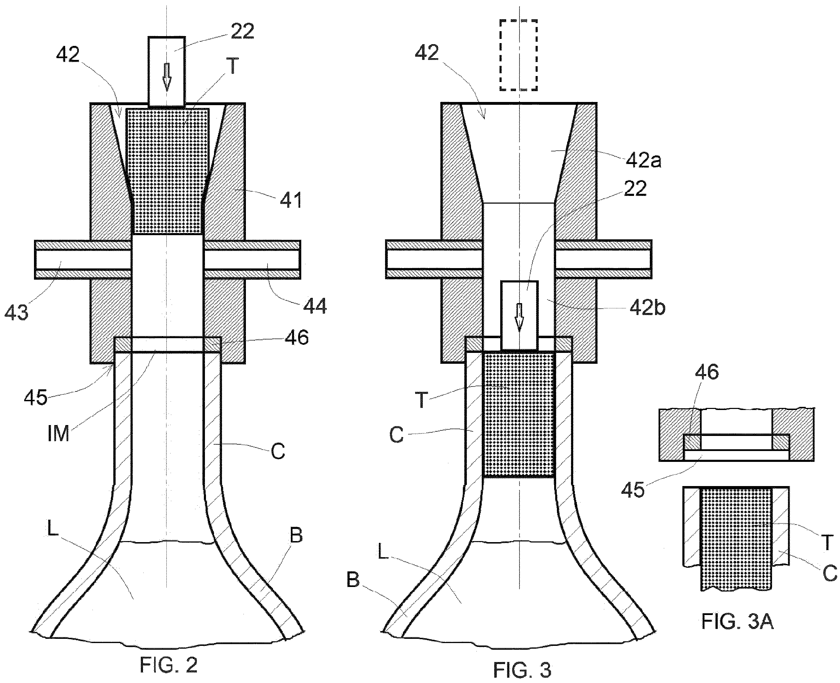

As shown in Fig. 2, the transfer manifold (40) comprises a collar (41) having an axial conduit (42) with a vertical axis. The axial conduit (42) has an upper conduit (42a) and a lower conduit (42b). The upper conduit (42a) has a truncated conical shape with decreasing section going downwards, until it is connected with the lower conduit (42b). The lower conduit (42b) has a cylindrical shape and a diameter equal to the internal diameter of a mouth (IM) of the bottle (B).

In correspondence with the lower conduit (42b) there is a pair of diametrically opposed holes with horizontal axis, wherein an inlet (43) and an outlet (44) with horizontal axis are inserted, radially protruding outwards in opposite directions from the transfer manifold. The inlet and outlet (43, 44) are equipped with respective closing/opening taps (43a and 44a).

The inlet (43) is hydraulically connected to the tap (12) located at the bottom of the autoclave (10) by means of a transfer tube (43b). The outlet (44) is hydraulically connected with the second nozzle (14) located at the top of the autoclave (10) by means of said tube (14a).

At the base of the collar (41) of the transfer manifold there is a circular seat (45), in concentric position with said lower conduit (42b), but having a larger diameter, suitable for receiving the mouth (IM) of the bottle (B). Therefore, the mouth (IM) of the bottle (B) can be inserted into the circular seat (45) of the lower conduit of the collar of the transfer manifold in male-female coupling mode. A gasket ring (46) is disposed in the circular seat (45) of the lower conduit of the collar of the transfer manifold in order to provide a hermetically sealed coupling of the mouth of the bottle. The bottling process according to the invention is defined in claim 5. A preferred embodiment of the process is described as follows.

Initially, the bottling system (100) is in a non-operating condition, wherein:
- the tap (12) of the autoclave is closed;
- the tap (34) of the compensation cylinder (30) is closed;
- the taps (43a, 44a) of the inlet and outlet (43, 44) are closed;
- the collar (41) of the transfer manifold is coupled in male-female coupling mode with the neck of the bottle (B) resting on the support pedestal (21) of the capping device; and
- the punch (22) of the capping device is in non-operating condition and is stopped at its upper end-of-travel position.

From said non-operating condition of the bottling system (100), the bottling process according to the preferred embodiment of the invention comprises the following steps:
- inserting a cap (T) in the upper conduit (42a) of the collar (41) and operating the punch (22) partially, in such a way as to partially introduce the cap (T) into the lower conduit (42b), without obstructing the holes of the inlet and outlet (43, 44), as shown in Fig. 2;
- reading the gas pressure inside the autoclave (10) on the pressure gauge (11) of the autoclave (10);
- reading the gas pressure inside the compensation cylinder (30) on the pressure gauge (31) of the compensation cylinder (30), checking that the pressure inside the compensation cylinder is higher than the pressure inside the autoclave;
- opening the tap (34) of the compensation cylinder to let the gas out from the compensation cylinder (30), while operating the pressure reducer (32) to match the pressure of the gas from the outlet nozzle (33) of the compensation cylinder with the pressure of the gas inside the autoclave (10);
- opening the tap (44a) of the outlet (44) in such a way as to put the autoclave (10) in hydraulic communication with the inside of the bottle (B), which is hermetically insulated from the environment outside the bottle (B) by means of the gasket ring (46) and the cap (T) that is partially introduced inside the lower conduit (42b) of the collar (41);
- opening the tap (12) of the autoclave (10) in order to transfer the liquid (L) by simple gravity from the autoclave (10) into the bottle (B) wherein there is the same pressure as in the autoclave (10), thus preventing the risk that the beverage loses its bubbles, originating the formation of abundant foam;
- completing the descending travel of the punch (22) in such a way as to push the cap (T) through the lower conduit (42b) of the collar (41) until the cap (T) is inserted in the neck (C) of the bottle (B), as shown in Fig. 3; and
- restoring the non-operating condition of the bottling system (100) and replacing the full bottle with a new empty bottle.

Fig. 3 shows a cap that is completely inserted inside the neck of the bottle, which is then closed with a metal crown cap. If the cap is to be associated with a safety cage, the cap is partially inserted inside the neck of the bottle in such a way that the cage can hold the head of the cap that remains outside the neck of the bottle.

It must be pointed out that two simultaneous gas transfers are spontaneously carried out when the liquid is transferred from the autoclave (10) into the bottle (B):
- the first transfer is that of the gas that leaves the bottle (B) and flows back into the autoclave (10) through the outlet (44) and the tube (14a);
- the second transfer is that of the gas that is transferred from the compensation cylinder (30) into the autoclave (10) by means of the tube (13a), so as to cancel the depression caused by the transfer of the liquid (L) into the bottle (B).

According to the process of the invention, preferably, the empty bottle into which the liquid is to be transferred is previously emptied of air and filled with carbon dioxide in order to avoid that, during the first transfer, the gas contained in the bottle and conveyed towards the autoclave (10) is carbon dioxide, and not air.

Finally, it should be noted that although in the preceding description reference is made to sparkling wines, the process and the bottling system according to the invention can be used for any sparkling wine obtained by refermentation, such as Lambrusco.

## Claims

1. Bottling system for sparkling wines produced in autoclave, in particular spumante wines, comprising:
- an autoclave (10) for containing a liquid (L) consisting in sparkling wine,
- a compensation cylinder (30) for containing an inert gas and provided with a pressure reducer (32) suitable for reducing the pressure of the gas delivered from an outlet nozzle (33) of the compensation cylinder, and
- a transfer manifold (40) for transferring the liquid from the autoclave (10) into the bottle (B);
said transfer manifold (40) comprising:
- a collar (41) applicable to a neck (C) of a bottle (B) and provided with an axial conduit (42) for the insertion of a cap (T) in order to close the bottle, and
- an inlet (43) connected to the autoclave (10) for transferring the liquid (L) from the autoclave to the bottle;
**characterized in that**
said compensation cylinder (30) is hydraulically connected to the autoclave (10); and
said transfer manifold (40) comprises an outlet (44) connected to the autoclave (10) for sending the gas from the bottle (B) to the autoclave (10)
said autoclave (10) comprises a tap (12) disposed in a lower part of the autoclave and connected to said inlet (43) of the transfer manifold (40) by means of a transfer tube (43b);
the compensation cylinder (30) comprises a tap (34);
said transfer manifold (40) comprises taps (43a, 44a);
said autoclave (10) comprises a pressure gauge (11); and
said compensation cylinder (30) comprises a pressure gauge (31).

2. The bottling system (100) of claim 1, wherein said autoclave (10) comprises:
- a first nozzle (13) disposed in an upper part of the autoclave (10) and connected to said outlet nozzle (33) of the compensation cylinder (30) by means of a tube (13a); and
- a second nozzle (14) disposed in an upper part of the autoclave (10) and connected to said outlet (44) of the transfer manifold (40) by means of a tube (14a).

3. The bottling system (100) according to any one of the preceding claims, comprising a capping device (20) suitable for inserting said cap (T) in said axial conduit (42) of the collar in order to close said bottle (B).

4. The bottling system (100) according to any one of the preceding claims, wherein said pressure reducer (32) is configured in such a way as to match the pressure of the gas from the outlet nozzle (33) of the compensation cylinder with the pressure inside the autoclave (10) during the transfer of the liquid from the autoclave to the bottle.

5. A bottling process using a bottling system (100) according to any one of the preceding claims, comprising the following steps:
- starting from an non-operating condition wherein taps (34, 12, 43a, 44a) of the compensation cylinder (30), of the autoclave (10) and of the transfer manifold (40) are closed to prevent a communication between the compensation cylinder (30) and the autoclave (10) and between the autoclave (10) and the transfer manifold (40).
- applying the transfer manifold (40) on a neck (C) of a bottle (B) to be filled;
- inserting a cap (T) in the axial conduit (42) of the transfer manifold collar (41), without obstructing the inlet and outlet (43, 44) of the transfer manifold;
- reading the gas pressure inside the autoclave (10) on the pressure gauge (11) of the autoclave;
- reading the gas pressure inside the compensation cylinder (30) on the pressure gauge (31) of the compensation cylinder, checking that said pressure is higher than the pressure read on the pressure gauge (11) of the autoclave;
- opening the tap (34) of the compensation cylinder to let the gas out from the compensation cylinder (30), operating the pressure reducer (32) in order to match the pressure of the gas from the outlet nozzle (33) of the compensation cylinder with the pressure of the gas inside the autoclave (10);
- opening the tap (44a) of the outlet nozzle (44) of the transfer manifold in such a way as to put the autoclave (10) in hydraulic communication with the inside of the bottle (B);
- opening the tap (12) of the autoclave (10) in order to transfer the liquid (L) by gravity from the autoclave (10) into the bottle (B);
- pushing the cap (T) through the axial conduit (42) of the collar (41) of the transfer manifold until the cap (T) is inserted inside the neck (C) of the bottle (B); and
- restoring the non-operating condition of the bottling system (100) by closing all the taps (34, 12, 43a, 44a) and replacing the full bottle with a new empty bottle.

## Patentansprüche

1. Flaschenabfüllanlage (100) für Schaumweine, die im Druckkessel hergestellt werden, insbesondere Sekte, umfassend:
- einen Druckkessel (10) zum Aufnehmen einer Flüssigkeit (L), bestehend aus Schaumwein,
- einen Ausgleichszylinder (30) zum Aufnehmen von Inertgas, der mit einem Druckminderer (32) versehen ist, der geeignet ist, den Druck des aus einer Auslassdüse (33) des Ausgleichszylinders abgegebenen Gases zu mindern, und
- eine Umfüllsammelleitung (40) zum Umfüllen der Flüssigkeit aus dem Druckkessel (10) in eine Flasche (B);
wobei die Umfüllsammelleitung (40) Folgendes umfasst:
- einen Bund (41), der an einem Hals (C) einer Flasche (B) anbringbar ist und mit einem Längskanal (42) zum Einstecken eines Stopfens (T) zum Verschließen der Flasche versehen ist, und
- einen Einlass (43), der mit dem Druckkessel (10) verbunden ist, um die Flüssigkeit (L) aus dem Druckkessel in die Flasche umzufüllen;
**dadurch gekennzeichnet, dass**
der Ausgleichszylinder (30) hydraulisch mit dem Druckkessel (10) verbunden ist; und
die Umfüllsammelleitung (40) einen Auslass (44) umfasst, der mit dem Druckkessel (10) verbunden ist, um das Gas aus der Flasche (B) in den Druckkessel (10) zu leiten;
der Druckkessel (10) einen Hahn (12) umfasst, der in einem unteren Teil des Druckkessels angeordnet ist und mit dem Einlass (43) der Umfüllsammelleitung (40) mittels eines Umfüllrohrs (43b) verbunden ist;
der Ausgleichszylinder (30) einen Hahn (34) umfasst;
die Umfüllsammelleitung (40) Hähne (43a, 44a) umfasst;
der Druckkessel (10) einen Druckmesser (11) umfasst; und
der Ausgleichszylinder (30) einen Druckmesser (31) umfasst.

2. Flaschenabfüllanlage (100) nach Anspruch 1, wobei der Druckkessel (10) Folgendes umfasst:
- eine erste Düse (13), der in einem oberen Teil des Druckkessels (10) angeordnet und mittels eines Rohrs (13a) mit der Auslassdüse (33) des Ausgleichszylinders (30) verbunden ist; und
- eine zweite Düse (14), die in einem oberen Teil des Druckkessels (10) angeordnet und mittels eines Rohrs (14a) mit dem Auslass (44) der Umfüllsammelleitung (40) verbunden ist.

3. Flaschenabfüllanlage (100) nach einem der vorstehenden Ansprüche, umfassend eine Verschlussvorrichtung (20), die geeignet ist, den Stopfen (T) in den Längskanal (42) des Bundes zum Verschließen der Flasche (B) einzustecken.

4. Flaschenabfüllanlage (100) nach einem der vorstehenden Ansprüche, wobei der Druckminderer (32) so konfiguriert ist, dass er den Druck des aus der Auslassdüse (33) des Ausgleichszylinders austretenden Gases während des Umfüllens der Flüssigkeit aus dem Druckkessel in die Flasche auf den Druck im Innern des Druckkessels (10) abstimmt.

5. Flaschenabfüllverfahren, das eine Flaschenabfüllanlage (100) nach einem der vorstehenden Ansprüche verwendet, umfassend die folgenden Schritte:
- Starten in einem Ruhezustand, in dem die Hähne (34, 12, 43a, 44a) des Ausgleichszylinders (30), des Druckkessels (10) und der Umfüllsammelleitung (40) geschlossen sind, um eine Verbindung zwischen dem Ausgleichszylinder (30) und dem Druckkessel (10) sowie zwischen dem Druckkessel (10) und der Umfüllsammelleitung (40) zu verhindern;
- Anbringen der Umfüllsammelleitung (40) auf einem Hals (C) einer zu befüllenden Flasche (B);
- Einstecken eines Stopfens (T) in den Längskanal (42) des Bundes (41) der Umfüllsammelleitung, ohne den Einlass und Auslass (43, 44) der Umfüllsammelleitung zu blockieren;
- Ablesen, auf dem Druckmesser (11) des Druckkessels, des Gasdrucks im Innern des Druckkessels (10);
- Ablesen, auf dem Druckmesser (31) des Ausgleichszylinders, des Gasdrucks im Innern des Ausgleichszylinders (30) und sicherstellen, dass der Druck höher als der auf dem Druckmesser (11) des Druckkessels abgelesene Druck ist;
- Öffnen des Hahns (34) des Ausgleichszylinders, um das Gas aus dem Ausgleichszylinder (30) abzulassen, indem der Druckminderer (32) so betätigt wird, dass der Druck des Gases aus der Auslassdüse (33) des Ausgleichszylinders mit dem Druck des Gases im Innern des Druckkessels (10) übereinstimmt;
- Öffnen des Hahns (44a) der Auslassdüse (44) der Umfüllsammelleitung, so dass der Druckkessel (10) mit dem Innern der Flasche (B) in hydraulische Verbindung gesetzt wird;
- Öffnen des Hahns (12) des Druckkessels (10), um das Umfüllen der Flüssigkeit (L) durch Schwerkraft aus dem Druckkessel (10) ins Innere der Flasche (B) zu ermöglichen;
- Drücken des Stopfens (T) durch den Längskanal (42) des Bundes (41) der Umfüllsammelleitung, bis der Stopfen (T) in den Hals (C) der Flasche (B) eingesteckt ist; und
- Wiederherstellen des Ruhezustands der Flaschenabfüllanlage (100) durch Schließen aller Hähne (34, 12, 43a, 44a) und Austauschen der vollen Flasche durch eine neue, leere Flasche.

## Revendications

1. Unité d'embouteillage (100) pour vins mousseux produits en autoclave, notamment les vins mousseux du type « spumante », comprenant :
- un autoclave (10) contenant un liquide (L) constitué de vin mousseux,
- une bouteille de compensation (30) contenant un gaz inerte et équipée d'un réducteur de pression (32) moyennant lequel il est possible de réduire la pression du gaz en sortie depuis une buse d'efflux (33) de la bouteille de compensation, et
- un collecteur de transbordement (40) pour transférer le liquide depuis l'autoclave (10) dans une bouteille (B) ;
ledit collecteur de transbordement (40) comprenant :
- un collier (41) applicable à un col (C) d'une bouteille (B) et muni d'un conduit axial (42) pour l'introduction d'un bouchon (T) pour boucher la bouteille, et
- une baie d'entrée (43) reliée à l'autoclave (10) pour le transbordement du liquide (L) depuis l'autoclave dans la bouteille ;
**caractérisée en ce que**
ladite bouteille de compensation (30) est reliée hydrauliquement à l'autoclave (10) ; et
ledit collecteur de transbordement (40) comprend une baie de sortie (44) reliée à l'autoclave (10) pour envoyer du gaz depuis la bouteille (B) vers l'autoclave (10) ;
ledit autoclave (10) comprend un robinet (12) disposé sur la partie inférieure de l'autoclave et relié à ladite baie d'entrée (43) du collecteur de transbordement (40) moyennant un tuyau de transfert (43b) ;
la bouteille de compensation (30) comprend un robinet d'ouverture/fermeture (34) ;
ledit collecteur de transbordement (40) comprend des robinets (43a, 44a) ;
ledit autoclave (10) comprend un manomètre (11) ; et
ladite bouteille de compensation (30) comprend un manomètre (31).

2. Unité d'embouteillage (100) selon la revendication 1, où ledit autoclave (10) comprend :
- une première buse (13) positionnée sur une partie supérieure de l'autoclave (10) et reliée, moyennant un tuyau (13a), à ladite buse d'efflux (33) de la bouteille de compensation (30) ; et
- une seconde buse (14) positionnée sur une partie supérieure de l'autoclave (10) et reliée, moyennant un tuyau (14a), à ladite baie de sortie (44) du collecteur de transbordement (40).

3. Unité d'embouteillage (100) selon l'une quelconque des revendications précédentes, comprenant un dispositif de bouchage (20) apte à introduire ledit bouchon (T) dans ledit conduit axial (42) du collier pour boucher ladite bouteille (B).

4. Unité d'embouteillage (100) selon l'une quelconque des revendications précédentes, où ledit réducteur de pression (32) est configuré de manière à uniformiser la pression du gaz en sortie de la buse d'efflux (33) de la bouteille de compensation avec la pression présente dans l'autoclave (10), pendant le transbordement du liquide depuis l'autoclave dans la bouteille.

5. Processus d'embouteillage qui utilise une unité d'embouteillage (100) selon l'une quelconque des revendications précédentes, comprenant les phases suivantes :
- partir d'une condition non opérationnelle où les robinets (34, 12, 43a, 44a) de la bouteille de compensation (30), de l'autoclave (10) et du collecteur de transbordement (40) sont fermés pour empêcher une communication entre la bouteille de compensation (30) et l'autoclave (10) et entre l'autoclave (10) et le collecteur de transbordement (40).
- appliquer le collecteur de transbordement (40) sur le collier (C) d'une bouteille (B) à remplir ;
- introduire un bouchon (T) dans le conduit axial (42) du collier (41) du collecteur de transbordement, sans obstruer les baies d'entrée et de sortie (43, 44) du collecteur de transbordement ;
- relever, sur le manomètre (11) de l'autoclave, la pression du gaz à l'intérieur de l'autoclave (10) ;
- relever, sur le manomètre (31) de la bouteille de compensation, la pression du gaz à l'intérieur de la bouteille de compensation (30), en vérifiant qu'elle est supérieure à celle relevée sur le manomètre (11) de l'autoclave ;
- ouvrir le robinet (34) de la bouteille de compensation pour permettre la sortie du gaz de la bouteille de compensation (30), en intervenant sur le réducteur de pression (32) aux fins d'uniformiser la valeur de la pression du gaz en sortie de ladite buse d'efflux (33) de la bouteille de compensation avec la valeur de la pression du gaz à l'intérieur de l'autoclave (10) ;
- ouvrir le robinet (44a) de la baie de sortie (44) du collecteur de transbordement de manière à mettre en communication hydraulique l'autoclave (10) avec l'intérieur de la bouteille (B) ;
- ouvrir le robinet (12) de l'autoclave (10) aux fins de permettre le transbordement du liquide (L), par gravité, de l'autoclave (10) à l'intérieur de la bouteille (B) ;
- pousser le bouchon (T) à travers ledit conduit axial (42) du collier (41) du collecteur de transbordement jusqu'à introduire le bouchon (T) à l'intérieur du collier (C) de la bouteille (B) ; et
- rétablir la condition non opérationnelle de l'unité d'embouteillage (100) en fermant tous les robinets (34, 12, 43a, 44a) et remplacer la bouteille pleine par une nouvelle bouteille vide.
